# EUROPÄISCHE PATENTSCHRIFT

(11) **EP 1 682 274 B1**
(45) Veröffentlichungstag und Bekanntmachung des Hinweises auf die Patenterteilung: **18.03.2015**
(21) Anmeldenummer: 04818122.6
(22) Anmeldetag: 04.11.2004
(51) Int. Cl.: B01L 3/00, G01N 1/31

(54) **PLATTFORM**
PLATFORM
PLATE-FORME

(30) Priorität: 05.11.2003 DE 10352716
(43) Veröffentlichungstag der Anmeldung: 26.07.2006
(73) Patentinhaber: Pathcom Systems Corporation, Dublin CA 94568 (US)
(72) Erfinder: EINSLE, Xaver, 76275 Ettlingen (DE); BECKER, Horst, Dieter, 72072 Tübingen (DE); STRATMANN, Rembert, 22397 Hamburg (DE)
(74) Vertreter: Gleiss & Grosse
(86) Internationale Anmeldenummer: PCT/EP2004/012455
(87) Internationale Veröffentlichungsnummer: WO 2005/044450

(56) Entgegenhaltungen:
- WO-A-00/63670
- US-A- 4 847 208
- US-A- 5 346 672
- US-A- 5 681 741

## Beschreibung

Die Erfindung betrifft eine Plattform für eine Vorrichtung zum Benetzen von Objekten, insbesondere für eine Inkubations-/Hybridisierungskammer gemäß Oberbegriff des Anspruchs 1, außerdem ein Verfahren zum Benetzen von Objekten gemäß Oberbegriff des Anspruchs 14.

Vorrichtungen und Verfahren der hier angesprochenen Art sind bekannt. Sie dienen dem Benetzen von Objekten mit einer Flüssigkeit, die ein Nachweismittel oder eine zu isolierende Substanz enthalten kann. Die Vorrichtung und das Verfahren dienen sowohl dem Nachweis, beispielsweise unter Verwendung von Färbe-, Hybridisierungs-, Nukleinsäure-Protein-Bindungs- oder Protein-Protein-Bindungsverfahren, als auch der Isolierung von Strukturen und/oder Bestandteilen biologischer Materialien. Vorrichtungen der hier angesprochenen Art weisen eine Plattform auf, die in unmittelbarem Abstand zu einem Objektträger angeordnet wird, um einen Raum zwischen Plattform und Objektträger einzuschließen, siehe z.B. US 5 346 672. In diesen Raum werden die oben genannten Flüssigkeiten eingebracht. Es hat sich herausgestellt, dass bei Einsatz dieser Plattformen bei Vorrichtungen und bei Durchführung der hier angesprochenen Verfahren ein Verlust der verwendeten Flüssigkeiten eintritt, der angesichts der Preise dieser Flüssigkeiten sehr nachteilig ist. Ein Flüssigkeitsverlust tritt insbesondere dann auf, wenn die Flüssigkeit, die ein Nachweismittel oder eine zu isolierende Substanz enthalten kann, erwärmt wird.

Aufgabe der Erfindung ist es daher, eine Vorrichtung zu schaffen, die diese Nachteile vermeidet.

Zur Lösung dieser Aufgabe wird eine Plattform vorgeschlagen, die die in Anspruch 1 genannten Merkmale umfasst. Sie weist eine mit Abstandshaltern versehene Grundplatte und einen diese tragenden Rahmen auf und zeichnet sich dadurch aus, dass die Grundplatte mit dem Rahmen beweglich verbunden ist. Dazu wird eine Lagereinrichtung eingesetzt, die in einer ersten Funktionsstellung die Grundplatte so hält, dass sie gegenüber dem Rahmen und der Lagereinrichtung vorspringt. In einer zweiten Funktionsstellung ragt die Lagereinrichtung bereichsweise über eine gedachte Ebene hinaus, in der die Oberfläche der Grundplatte angeordnet ist. Dadurch kann die Lagereinrichtung als Dichtung wirken, die einen zwischen der Grundplatte und einem Objektträger eingeschossenen Raum abdichtet. Somit können für Untersuchungen eingesetzte Reagenzien nicht verdunsten, was zu einer nachhaltigen Einsparung an Material führt. Andererseits wird verhindert, dass für die Umwelt schädliche Substanzen aus dem zwischen Plattform und Objektträger vorhandenen Raum an die Umgebung abgegeben werden, was gegebenenfalls zu einer Umweltbelastung führen könnte.

Weitere Ausgestaltungen ergeben sich aus den Unteransprüchen.

Zur Lösung dieser Aufgabe wird auch ein Verfahren vorgeschlagen, das die in Anspruch 14 genannten Merkmale umfasst. Es zeichnet sich dadurch aus, dass die Grundplatte auf einen Objektträger aufgesetzt wird, so dass der mindestens eine Abstandshalter, der auf der Grundplatte vorgesehen ist, diese in einem Abstand zum Objektträger hält und ein seitlich offener Raum zwischen Grundplatte und Objektträger eingeschlossen wird. Durch Ausüben einer Kraft auf den die Grundplatte haltenden Rahmen wird erreicht, dass der Rahmen gegenüber der Grundplatte verlagert und der Raum zwischen Grundplatte und Objektträger abgeschlossen wird. Dies erfolgt mittels einer Lagereichrichtung, die den Rahmen mit der Grundplatte beweglich verbindet. Auf diese Weise ist es möglich, den zwischen Grundplatte und Objektträger gegebenen Raum dicht abzuschließen.

Die Erfindung wird im Folgenden anhand der Zeichnungen näher erläutert. Es zeigen:
- Figur 1: eine Draufsicht auf eine Plattform einer Vorrichtung zum Benetzen von Objekten;
- Figur 2: einen Schnitt entlang der in Figur 1 dargestellten Linie A-A;
- Figur 3: eine perspektivische Ansicht der in Figur 1 dargestellten Plattform;
- Figur 4: eine Ansicht der Unterseite der Plattform gemäß der Darstellung in Figur 3;
- Figur 5: eine Draufsicht auf ein abgewandeltes Ausführungsbeispiel der Plattform;
- Figur 6: einen Längsschnitt entlang der in Figur 5 wiedergegebenen Linie A-A;
- Figur 7: einen Querschnitt entlang der in Figur 5 wiedergegebenen Linie B-B;
- Figur 8: eine vergrößerte Detaildarstellung eines Elements nach Figur 7;
- Figur 9: eine perspektivische Darstellung eines abgewandelten Ausführungsbeispiels einer Grundplatte einer Plattform;
- Figur 10: eine Draufsicht auf die in Figur 9 wiedergegebene Plattform;
- Figur 11: einen Längsschnitt entlang der in Figur 10 dargestellten Linie A-A;
- Figur 12: eine Halterung für eine Plattform;
- Figur 13: eine mit einem Basisteil verbundene Halterung und
- Figur 14: einen Längsschnitt durch die in Figur 13 dargestellte Vorrichtung.

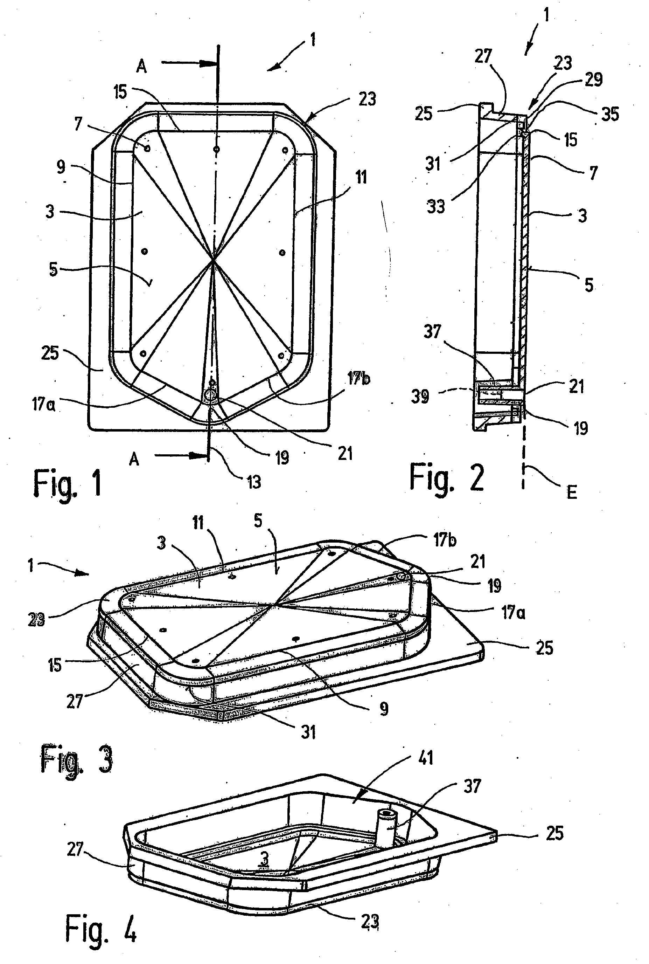

Die Draufsicht gemäß Figur 1 zeigt eine Plattform 1 mit einer Grundplatte 3, von deren Oberfläche 5 mindestens ein Abstandshalter 7 entspringt. Bei dem hier dargestellten Ausführungsbeispiel sind entlang der Längskanten 9 und 11 der im Wesentlichen rechteckförmigen Grundplatte 3 je drei Abstandshalter 7 vorgesehen. Im Bereich der Symmetrieachse 13 sind oben und unten nochmals je ein Abstandshalter 7 vorgesehen. Figur 1 zeigt, dass die untere Schmalseite der Grundplatte 3 nicht parallel zur oberen Schmalseite 15 verläuft sondern praktisch V-förmig nach unten aufgeweitet ist, wobei ein erster Schenkel 17a von der Symmetrieachse 13 zur linken Längskante 9 und ein zweiter Schenkel 17b von der Symmetrieachse 13 zur rechten Längskante 11 verläuft. Am Scheitelpunkt 19 der Schenkel 17a, 17b ist eine Öffnung 21 in der Oberfläche 15 zu erkennen, über die eine Flüssigkeit zuführbar oder ableitbar ist.

Die Grundplatte 3 ist von einer Lagereinrichtung 23 umgeben, die die Grundplatte 3 mit einer Basisplatte 25 verbindet.

Alle Außenkanten der Grundplatte 3 verlaufen unter einem Radius, sie sind also abgerundet.

Figur 2 zeigt die Plattform 1 im Längsschnitt, wobei die Schnittführung der Linie A-A folgt, die in Figur 1 dargestellt ist. Gleiche Teile sind mit gleichen Bezugsziffern versehen, so dass auf die Beschreibung zu Figur 1 verwiesen wird, um Wiederholungen zu vermeiden.

Der Längsschnitt lässt erkennen, dass die Grundplatte 3 parallel zur Basisplatte 25 und in einem Abstand zu dieser verläuft. Die Lagereinrichtung 23 verbindet also die Grundplatte 3 hier nicht unmittelbar mit der Basisplatte 25, vielmehr wird die Grundplatte 3 von einem Rahmen 27 getragen, an dem einerseits die Lagereinrichtung 23 befestigt ist und der andererseits an der Basisplatte 25 angebracht, vorzugsweise einstückig mit dieser ausgebildet ist.

Die Lagereinrichtung 23 weist ein elastisches Material auf, vorzugsweise besteht sie ganz aus einem derartigen Material und ist im Wesentlichen ringförmig ausgebildet. Ein erster Bereich 29 ist mit der Stirnseite 31 des Rahmens 27 verbunden, ein zweiter Bereich 33 mit der Grundplatte 3. Zwischen dem ersten Bereich 29 und dem zweiten Bereich 33 befindet sich ein nachgiebiger dritter Bereich 35, der beispielsweise durch eine reduzierte Wandstärke der Lagereinrichtung 23 realisiert ist.

Figur 2 lässt noch erkennen, dass die Grundplatte in der hier dargestellten ersten Funktionsstellung der Lagereinrichtung 23 über diese etwas vorspringt, damit auch gegenüber dem Rahmen 27. Das heißt, die Lagereinrichtung 23 ragt in der hier dargestellten ersten Funktionsstellung nicht über eine gedachte Ebene E hinaus, in der die Oberfläche 5 der Grundplatte 3 liegt, auch nicht über eine gedachte Ebene, in der die der Oberfläche 5 abgewandten Enden der Abstandshalter 7 liegen.

Die Schnittdarstellung gemäß Figur 2 zeigt im Übrigen, dass sich an die in der Oberfläche 5 der Grundplatte 3 mündende Öffnung 21 ein Ansatz 37 anschließt, der über eine Pipettiernadel zugänglich ist oder an den ein Leitungs- oder Schlauchsystem für die Zu- und Abfuhr eines Mediums angeschlossen werden kann. Punktiert ist angedeutet, dass der Ansatz 37 durch eine wieder verschließbare Membran 39 verschlossen sein kann, die mittels einer Pipettiernadel durchstoßbar ist und sich nach dem Entfernen der Nadel wieder schließt.

Figur 3 zeigt die Plattform 1 in perspektivischer Ansicht. Gleiche Teile sind mit gleichen Bezugsziffern versehen, so dass insofern auf die Beschreibung zu den Figuren 1 und 2 verwiesen wird.

Deutlich erkennbar ist hier die Basisplatte 25 der Plattform 1, die den Rahmen 27 trägt und auf dessen Stirnseite 31 die ringförmige Lagereinrichtung 23 angebracht ist. Bei dem hier dargestellten Ausführungsbeispiel schließt die Lagereinrichtung 23 bündig mit der Außenseite des Rahmens 27 ab und erstreckt sich in den von diesem umschlossenen Innenraum, wobei ein erster Bereich 29 der Lagereinrichtung 23 auf der Stirnseite 31 des Rahmens 27 aufliegt und ein im Abstand dazu liegender zweiter Bereich 33 die Grundplatte 3 trägt. Deren Außenkontur ist kleiner als die Innenkontur des Rahmens 27, der im Übrigen der Außenkontur der Grundplatte 3 folgt, also auch im Wesentlichen rechteckförmig ausgebildet ist und an einer Seite einen V-förmigen Vorsprung aufweist, dem die Schenkel 17a und 17b der Grundplatte 3 zugeordnet sind.

Die von der Basisplatte 25 aus gemessene Höhe des Rahmens 27 kann auf unterschiedliche Einsatzfälle abgestimmt werden. Es ist grundsätzlich auch möglich, die Lagereichrichtung 23 unmittelbar an der Basisplatte 25 zu befestigen, die Höhe des Rahmens 27 also quasi auf Null zu reduzieren. Entscheidend ist, dass in der in den Figuren 1 bis 3 wiedergegebenen unbelasteten ersten Funktionsstellung die Oberfläche 5 der Grundplatte 3 gegenüber der Lagereinrichtung 23 und damit gegenüber dem Rahmen 23, beziehungsweise der Basisplatte 25 vorspringt.

Figur 4 zeigt in perspektivischer Ansicht die der Oberfläche 5 der Grundplatte 3 gegenüberliegende Seite der Plattform 1, also die Unterseite der Darstellung nach Figur 3. Gleiche Teile sind mit gleichen Bezugsziffern versehen, so dass auf die Beschreibung der vorangegangenen Figuren verwiesen wird.

Aus Figur 4 ist ersichtlich, dass der Rahmen 27 einen Hohlraum 41 umschließt, in den der Ansatz 37 ragt.

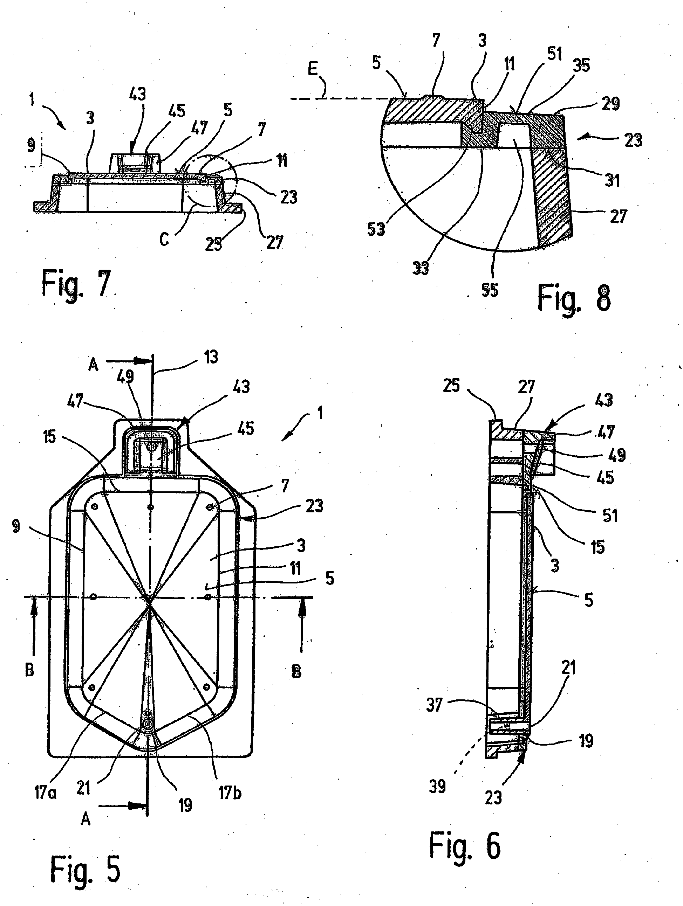

Figur 5 stellt ein abgewandeltes Ausführungsbeispiel einer Plattform 1 dar. Gleiche Teile sind auch hier mit gleichen Bezugsziffern versehen, so dass auf die Beschreibung zu den Figuren 1 bis 4 verwiesen wird und im Folgenden lediglich auf Unterschiede eingegangen werden kann.

Die Draufsicht zeigt die Plattform 1 mit einer Grundplatte 3, auf deren Oberfläche 5 mindestens ein, hier - wie bei dem vorangegangenen Ausführungsbeispiel - acht Abstandshalter 7 vorgesehen sind, die auch hier nahe den Außenkanten der Grundplatte 3 angeordnet sind. Die Grundplatte 1 ist von einer Lagereinrichtung 23 umgeben, die grundsätzlich gleich aufgebaut ist, wie die bei dem vorangegangenen Ausführungsbeispiel der Plattform 1. Lediglich im Bereich der oberen Schmalseite 15 der Grundplatte weist die Lagereinrichtung 23 einen symmetrisch zur Symmetrieachse 13 angeordneten, im Wesentlichen rechteckförmigen Vorsprung 43 auf, der als Pipettieransatz ausgebildet ist, eine Pipettierfläche 45 und einen diesen umgebenden Rand 47 aufweist. In der Pipettierfläche 45 ist eine hier Öffnung 49 vorgesehen, über die eine Flüssigkeit zugeführt werden kann.

Der entlang der Linie A-A geführte Längsschnitt durch die Plattform 1, der in Figur 6 wiedergegeben ist, lässt erkennen, dass die Pipettierfläche 45 ausgehend von der Öffnung 49 in Richtung auf die Grundplatte 3 abfällt.

Die Schnittdarstellung gemäß Figur 6 zeigt deutlich, dass der Vorsprung 43 vorzugsweise Teil der Lagereinrichtung 23 ist. Diese Ausführungsform ist besonders einfach herstellbar. Denkbar ist es aber auch, einen getrennten Vorsprung vorzusehen. Es muss dann jedoch darauf geachtet werden, dass die Pipettierfläche 45 möglichst ansatzlos in die Oberfläche 51 der Lagereinrichtung 23 übergeht, damit auf die Pipettierfläche 45 aufgegebene Flüssigkeit problemlos zur Grundplatte 3 gelangen kann.

Figur 6 zeigt deutlich, dass die Grundplatte 3 gegenüber der Lagereinrichtung 23 aber auch gegenüber dem Rahmen 27 beziehungsweise der Basisplatte 25 vorspringt, wenn die Lagereinrichtung 23 unbelastet ist, wie dies in den Figuren 1 bis 8 dargestellt ist.

Figur 7 zeigt einen entlang der in Figur 5 dargestellten Linie B-B geführten Querschnitt durch die Plattform 1. Deutlich wird hier, dass der Übergang der Grundplatte 3 in die Lagereinrichtung 23 auf beiden Längsseiten der Grundplatte 3 gleich ausgebildet ist.

Der mit C in Figur 7 dargestellte Übergangsbereich zwischen Grundplatte 3 zur Lagereinrichtung 23 und von dieser zum Rahmen 27 ist in Figur 8 deutlich vergrößert dargestellt. Gleiche Teile sind mit gleichen Bezugsziffern versehen, so dass auch hier auf die Beschreibung zu den vorangegangenen Figuren verwiesen wird.

Figur 8 zeigt deutlich, dass die Grundplatte 3 über die Oberfläche 51 der Lagereinrichtung 23 vorspringt. Die Vergrößerung zeigt auch einen der Abstandshalter 7, der von der Oberfläche 5 der Grundplatte 3 entspringt. Ohne weiteres ist hier auch erkennbar, dass die Lagereinrichtung in ihrer ersten Funktionsstellung nicht über die in Zusammenhang mit Figur 2 angesprochene gedachte Ebene hinausragt, sondern gegenüber dieser zurückspringt.

Durch die Vergrößerung wird augenscheinlich, dass die Lagereinrichtung 23 auf die Stirnseite 31 des Rahmens 27 aufgebracht ist. Oberhalb der Stirnseite 31 liegt der erste Bereich 29 der Lagereinrichtung 23.

In einem Abstand zum Rahmen 27 verläuft die rechte Längskante 11 der Grundplatte 3, die hier in die Lagereinrichtung 23 eingreift, so dass die Grundplatte 3 sicher mit dieser verbunden ist. Die Grundplatte weist einen in die Lagereinrichtung 3 reichenden Vorsprung 53 auf, um eine sichere Verankerung an der Lagereinrichtung 23 zu gewährleisten. Dieser ragt nach unten, also in entgegengesetzter Richtung wie der Abstandshalter 7, der von der Oberfläche 5 der Grundplatte 3 entspringt.

Der Befestigungsbereich der Grundplatte 3 in der Lagereinrichtung 23 wird als zweiter Bereich 33 bezeichnet. Zwischen dem ersten Bereich 29 und dem zweiten Bereich 33 der Lagereinrichtung 23 befindet sich der nachgiebige dritte Bereich 35, der sich vorzugsweise durch eine reduzierte Wandstärke auszeichnet, also besonders elastisch ist.

Die reduzierte Wandstärke wird dadurch erreicht, dass in die Lagereinrichtung 23 im dritten Bereich 35 von unten eine Nut 55 eingebracht ist. Für die Ausbildung des elastischen dritten Bereichs 35 kommt es allerdings nicht darauf an, ob die Nut 55 - wie hier - von unten in die Lagereinrichtung 23 eingebracht wird oder von oben. Entscheidend ist, dass der erste Bereich 29 gegenüber dem zweiten Bereich 33 der Lagereinrichtung 23 verlagerbar ist.

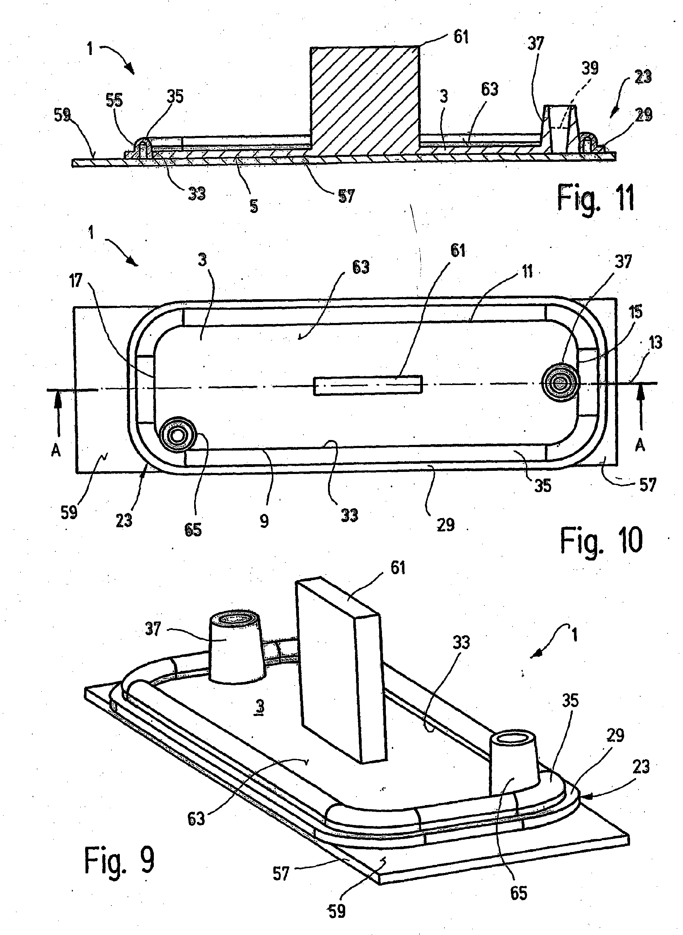

Figur 9 zeigt einen Teil eines weiteren Ausführungsbeispiels einer Plattform 1, nämlich deren Grundplatte 3, die auf einen Objektträger aufgebracht ist. Gleiche Teile sind mit gleichen Bezugszeichen versehen, so dass insofern auf die Beschreibung zu den vorangegangenen Figuren verwiesen wird.

Die Grundplatte 3 liegt mit ihrer Oberfläche 5 auf der Oberfläche 59 des Objektträgers auf, und zwar in einem Abstand, der durch die Höhe der Abstandshalter 7 vorgegeben wird.

In Figur 9 ist aus Gründen der besseren Übersichtlichkeit der Rahmen 27 weggelassen, der bei den anderen Ausführungsbeispielen in den Figuren 1 bis 8 dargestellt war. Es ist daher ohne weiteres der Ansatz 37 erkennbar, der im Bereich der hier nicht dargestellten Symmetrieachse 13 der Grundplatte 3 angeordnet ist. Auf dieser ist auch ein Vorsprung 61 vorgesehen, der mit der der Oberfläche 5 gegen-überliegenden Unterseite 63 der Grundplatte 3 verbunden, vorzugsweise einstückig mit dieser ausgebildet ist. Die von der Unterseite 63 aus gemessene Höhe des Vorsprungs 61 ist, genauso wie dessen Längserstreckung entlang der Symmetrieachse 13 und Dicke an verschiedene Einsatzfälle anpassbar. Der Vorsprung 61 dient als Ansatz für eine so genannte Torkelvorrichtung, mit der die Grundplatte 3 etwas nach rechts und links und vorne und hinten verkippt werden kann. Diese Kippbewegung dient insbesondere dazu, die Flüssigkeit in dem zwischen der Oberfläche 5 der Grundplatte 3 und der Oberfläche 69 des Objektträgers 57 eingeschlossenen Raum zu vermischen.

Bei der Darstellung gemäß Figur 9 ist die Lagereinrichtung 23 nach unten, das heißt auf die Oberfläche 59 des Objektträgers 57 gedrückt, so dass der zwischen Grundplatte 3 und Objektträger 57 eingeschlossene Raum rundum abgedichtet wird. Dabei wird der erste Bereich 29 von dem hier nicht dargestellten Rahmen gegen den Objektträger 57 gedrückt. Der gegenüberliegende zweite Bereich 33 ist an der Grundplatte 3 befestigt. Dazwischen befindet sich ein hier nach oben gewölbter dritter Bereich 35, der eine Relativbewegung zwischen dem ersten Bereich 29 und dem zweiten Bereich 33 der Lagereinrichtung 23 ermöglicht und damit eine Abdichtung des Raums zwischen Grundplatte 3 und Objektträger 57. Der elastische dritte Bereich 35 ermöglicht auch die Kippbewegung der Grundplatte 3 gegenüber dem Objektträger 57, ohne dass die Dichtwirkung des ersten Bereichs 29 gegenüber der Oberfläche 59 des Objektträgers 57 aufgehoben würde. Bei einer derartigen Kipp- oder Torkelbewegung der Grundplatte wird der elastische dritte Bereich 35 dort gedehnt, wo die Grundplatte 3 gegenüber der Oberfläche 59 des Objektträgers etwas angehoben wird.

Die Grundplatte 3 weist hier noch einen im Bereich einer Ecke angeordneten zweiten Ansatz 65 auf, der in einer hier nicht dargestellten Öffnung in der Oberfläche 5 der Grundplatte 3 endet und damit einen Zugang zu dem Raum zwischen Grundplatte 3 und Objektträger 57 bildet. Gegebenenfalls ist auch hier ein in Zusammenhang mit Figur 2 erläuterte Membran 39 vorgesehen, die mittels einer Pipettiernadel durchstoßbar ist.

Figur 10 zeigt die Grundplatte 3 der Plattform 1 gemäß Figur 9 in Draufsicht, also eine Ansicht der Unterseite 63. Gleiche Teile sind auch hier mit gleichen Bezugsziffern versehen, so dass auf die vorangegangene Figurenbeschreibung verwiesen wird.

Die Draufsicht zeigt den entlang der Symmetrieachse 13 verlaufenden Vorsprung und den symmetrisch angeordneten Ansatz 37, außerdem den zweiten Ansatz 65, der an der Längskante 9 angeordnet ist. Die Grundplatte 3 ist hier im Wesentlichen rechteckförmig ausgebildet und weist abgerundete Kanten auf. Beide Schmalseiten 15 und 17 verlaufen parallel zueinander und senkrecht zu den Längskanten 9 und 11.

Der Vorsprung 61 ist vorzugsweise mittig zwischen den Schmalseiten 15 und 17 angeordnet. An Stelle des einen Vorsprungs 61 können auch mehrere Vorsprünge vorgesehen werden, die der Verkippung der Grundplatte 3 gegenüber dem Objektträger 57 dienen, damit der Vermischung der im Raum zwischen Grundplatte 3 und Objektträger 57 eingeschlossenen Flüssigkeit. Figur 11 zeigt einen entlang der in Figur 10 dargestellten Linie A-A geführten Längsschnitt durch den Teil der Plattform 1, der in den Figuren 9 und 10 wiedergegeben ist. Gleiche Teile sind mit gleichen Bezugsziffern versehen, sodass insofern auf die vorangegangene Beschreibung verwiesen wird.

Der Längsschnitt zeigt die Grundplatte 3 mit der umlaufenden Lagereinrichtung 23, die einen ersten Bereich 29, einen sich an die Außenkontur der Grundplatte 3 anschließenden zweiten Bereich 33 und einem dazwischen liegenden elastischen zweiten Bereich 35 aufweist. Der elastische Bereich ist nach oben gewölbt, und weist hier eine kreisbogenförmige Kontur auf. Die elastische Verbindung zwischen dem ersten Bereich 29 und dem zweiten Bereich 33 erfolgt auch hier dadurch, dass der dritte Bereich 39 eine reduzierte Wandstärke aufweist. Hier ist eine in Richtung zur Oberfläche 59 des Objektträgers 57 offene Nut 55 vorgesehen.

Die Oberfläche 5 der Grundplatte 3 ist, wie bei den vorangegangenen Ausführungsbeispielen, mit mindestens einem Abstandshalter versehen, sodass diese nicht direkt auf der Oberfläche 59 des Objektträgers 57 aufliegt, sondern vielmehr einen Raum zwischen der Oberfläche 5 und der Oberfläche 55 verbleibt, der hier lediglich durch eine dickere Linie angedeutet ist. Dieser Raum kann über den Ansatz 37 mit Flüssigkeit versorgt werden. Auch ist es denkbar, diese über den Ansatz 37 wieder abzuleiten. Gepunktet ist auch hier eine Membran 39 dargestellt, mit der sowohl der Ansatz 37 als auch der zweite Ansatz 65 abgeschlossen werden kann, wobei die Membran 39 mittels einer Pipettiernadel durchstechbar ist. Das Material der Membran 39 wird vorzugsweise so gewählt, dass das durch die Pipettiernadel gebildete Loch sich nach deren Entfernung wieder selbständig verschließt.

Es sei hier noch einmal darauf hingewiesen, dass der erste Bereich 29 der Lagereinrichtung 23 mit einem Rahmen 27 oder unmittelbar mit einer Basisplatte 25 verbunden werden kann, was anhand der Figuren 1 bis 8 dargestellt und erläutert wurde.

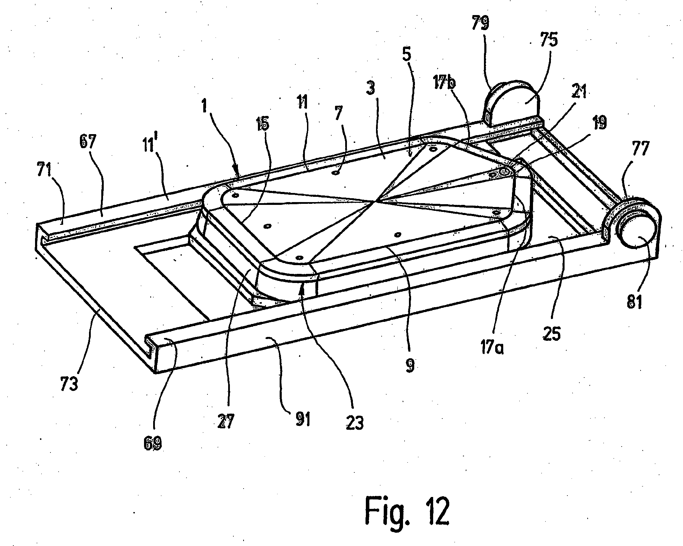

Figur 12 zeigt eine anhand der Figuren 1 bis 4 erläuterte Plattform 1, die von einer Halterung 67 gehalten wird. Die Halterung 67 weist entlang ihrer Längskanten 9' und 11' U-förmige Schienen 69, 61 auf, die sich entgegengesetzt zueinander öffnen und so ausgebildet sind, dass sie die Basisplatte 25 der Plattform 1 rechts und links umgreifen. Die Schienen 69 und 61 verlaufen parallel zu den Längskanten der Plattform 1, damit auch zu den Längskanten 9 und 11 der Grundplatte 3, sodass die Plattform 1 innerhalb der Schienen 69, 71 in Längsrichtung der Schienen verschoben werden kann.

Auf ihrer in Figur 12 linken Seite 73 sind die Schienen 69 und 71 offen, sodass die Plattform 1 in die Halterung eingeschoben werden kann. Auf der rechten Seite der Halterung 67 sind Ansätze 75 und 77 vorgesehen, die gemäß Figur 12 nach oben vorspringen und jeweils einen nach außen gerichteten Achsstummel 79, 81 tragen.

In der Darstellung gemäß Figur 12 ist die Plattform 1 wie anhand von Figur 3 erläutert angeordnet. Die perspektivische Ansicht zeigt also die Oberfläche 5 der Grundplatte 3 mit dem mindestens einen Abstandshalter 7.

Anstelle der Plattform 1, die in den Figuren 1 bis 4 dargestellt wurde, kann auch die Plattform vorgesehen werden, die anhand der Figuren 5 bis 8 dargestellt und beschrieben wurde. Schließlich ist es auch möglich, die in den Figuren 9 bis 11 wiedergegebene Plattform 1 in die Halterung 67 einzuschieben, sofern hier die Basisplatte 65 und der Rahmen 27 ergänzt werden, der anhand der vorangegangenen Ausführungsbeispiele erläutert wurde.

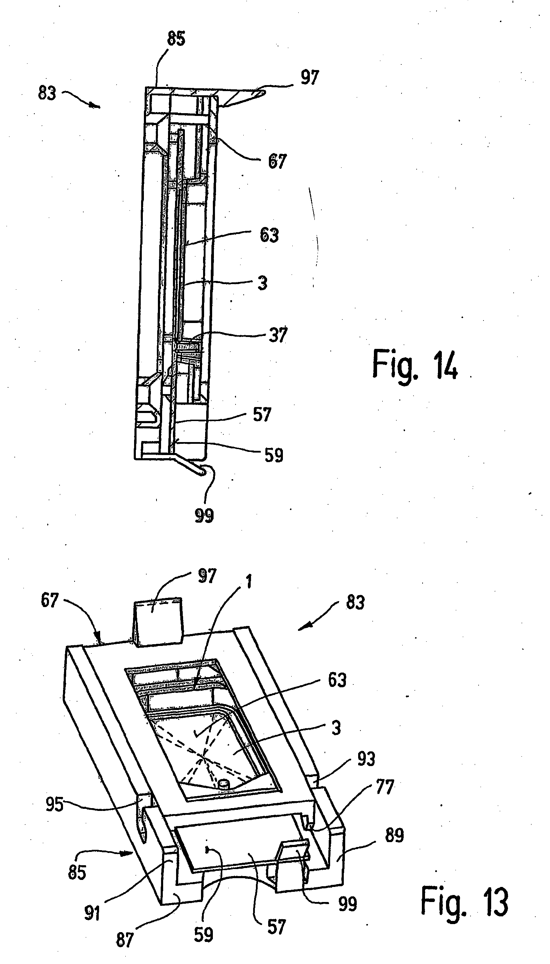

Figur 13 zeigt in perspektivischer Ansicht eine Vorrichtung 83 zum Benetzen von Objekten, insbesondere zur Realisierung einer Inkubations-/Hybridisierungskammer. Die Vorrichtung 83 umfasst die anhand von Figur 12 erläuterte Halterung 67 mit der Plattform 1, die hier in perspektivischer Ansicht ähnlich Figur 4 dargestellt ist. Die Halterung 67 ist hier in ein Basisteil 85 eingesetzt, das im Wesentlichen U-förmig ausgebildet ist, also eine Basis 87 aufweist, an deren Längskanten Seitenwände 89 und 91 vorgesehen sind. In diese sind gegenüberliegende L-förmige Ausnehmungen 93 und 95 eingebracht, in die die Achsstummel 79 und 81 der Halterung 67 eingreifen, sodass diese verschwenkbar mit dem Basisteil 85 verbunden ist. In der Darstellung gemäß Figur 13 ist die Halterung 67 nach unten verschwenkt und wird in dieser Position von einer Haltenase 97 gehalten, die beispielsweise mit der Basis 87 elastisch nachgiebig verbunden ist.

Das Basisteil 85 dient der Aufnahme und Halterung eines Objektträgers 57, der durch eine Sicherungsnase 99 gehalten wird.

Durch die Halterung 67 wird die Grundplatte der Plattform 1 gegen die Oberfläche 59 des Objektträgers 57 angepresst, sodass, wie bei den Darstellungen gemäß den Figuren 9 bis 11 zwischen der Oberfläche 5 der Grundplatte 3 und der Oberfläche 59 des Objektträgers 57 ein Raum ausgebildet wird, weil die Grundplatte 3 durch die Abstandshalter 7 in einem Abstand zum Objektträger 57 gehalten wird. Der Raum wird rund um durch den als Dichtung wirkenden ersten Bereich 29 der Lagereinrichtung 23 abgedichtet.

Wird die Haltenase 97 zurückgeschwenkt, gibt sie die Halterung 67 frei, sodass diese nach oben geschwenkt werden kann. Da die Ausnehmungen 93 und 95 in den Seitenwänden 89 und 91 nach oben offen sind, kann die Halterung 67 ganz vom Basisteil 85 getrennt werden, weil die Achsstummel 79 und 81 von den Ausnehmungen 93 und 95 freigegeben werden können. Dazu wird die hochgeschwenkte Halterung 87 in Richtung auf die Haltenase 97 verlagert, sodass die Achsstummel 79 und 81 freigegeben werden.

Figur 14 zeigt die Vorrichtung 83 im Längsschnitt, wobei die Schnittlinie entlang der Längsmittelebene der Vorrichtung 83 verläuft. Gleiche Teile sind mit gleichen Bezugsziffern versehen, sodass insofern auf die Beschreibung der vorangegangenen Figuren verwiesen wird.

Figur 14 zeigt das Basisteil 85 mit der Haltenase 97, die in der hier dargestellten Verriegelungsstellung die Halterung 67 etwas übergreift und unter einer Vorspannung festhält. Damit wird die von der Halterung 67 gehaltene Plattform 1 gegen den Objektträger 57 angedrückt, der vom Basisteil 85 gehalten wird. Insbesondere wird die Grundplatte 3 der Plattform 1 mit ihrer Oberfläche 5 gegen die Oberfläche 59 des Objektträgers 57 gedrückt, wobei hier durch die Abstandshalter 7 der Grundplatte 3 ein Raum verbleibt, der über den Ansatz 37 mit Flüssigkeit versorgt werden kann. Diese kann über denselben Ansatz 37 oder über einen weiteren Ansatz abgesaugt werden, wie er beispielhaft im Zusammenhang mit dem in Figuren 9 bis 11 dargestellten Ausführungsbeispiel erläutert wurde.

Im Folgenden wird auf die Funktion der Plattform im Zusammenhang mit einer Vorrichtung zum Benetzen von Oberflächen beziehungsweise einer Inkubations-/Hybridisierungskammer näher eingegangen, ebenso auf das Verfahren zum Benetzen von Objekten, insbesondere zur Bildung einer Inkubations-/Hybridisierungskammer.

Grundsätzlich ist es bekannt, Vorrichtungen zum Benetzen von Objekten und Kammern der hier angesprochenen Art dadurch zu realisieren, dass die Grundplatte 3 einer Plattform 1, auf deren Oberfläche 5 mindestens ein Abstandshalter 7 vorgesehen ist, auf die Oberfläche 59 eines Objektträgers aufgebracht wird, wobei ein Raum zwischen Grundplatte und Objektträger eingeschlossen wird, dessen Dicke von der Höhe der Abstandshalter bestimmt wird. Die Höhe kann beispielsweise 6/100 mm betragen. In den Raum wird auf geeignete Weise, beispielsweise über einen Ansatz 37 oder über eine Pipettierfläche 45, eine Flüssigkeit eingebracht, die diesen aufgrund von Kapillar- und Adhäsionskräften vollständig ausfüllt. Bei Verwendung einer Pipettierfläche kann nur dann Flüssigkeit in den Raum eingebracht werden, wenn die Plattform 1 nicht auf einen Objektträger gedrückt wird, weil nur dann die Lagereinrichtung 23 den Raum noch nicht abdichtet.

Wird die Grundplatte 5 nur auf den Objektträger 57 aufgesetzt, also nicht angepresst, wird ein Raum eingeschlossen, dessen Seiten offen sind. Es ist also grundsätzlich möglich, dass hier Flüssigkeit austritt und gegebenenfalls die Umwelt belastet, zumindest den Benutzer der Plattform 1. Denkbar ist es aber auch, dass Flüssigkeit aus dem Raum entweicht und verdunstet, was angesichts des hohen Preises einiger Flüssigkeiten sehr nachteilig ist.

Die anhand der Figuren erläuterte Plattform 1 zeichnet sich dadurch aus, dass sie eine Grundplatte 3 aufweist und einen Rahmen 27, der diese trägt. Der Rahmen ist mit einer Basisplatte 25 verbunden. Die Plattform 1 ist dadurch gekennzeichnet, dass die Grundplatte 3 nicht fest mit dem Rahmen 27 beziehungsweise der Basisplatte 25 verbunden, sondern dass eine bewegliche Aufhängung vorgesehen ist. Diese bewegliche Verbindung wird durch die Lagereinrichtung 23 realisiert, die in unbelastetem Zustand die Grundplatte 3 in einer vorgegebenen Position so hält, dass sie über die Lagereinrichtung 23 beziehungsweise über den Rahmen 27 und die Basisplatte 25 vorsteht.

Diese vorgegebene Anordnung der Grundplatte 3 gegenüber der Lagereinrichtung 23 bewirkt Folgendes: Wird die Oberfläche 5 der Grundplatte 3 einem Objektträger angenähert, so berührt zunächst der mindestens eine Abstandshalter 7 der Oberfläche 5 der Grundplatte 3 die Oberfläche 59 des Objektträgers 57, wobei ein definierter randoffener Raum eingeschlossen wird. Der Abstand zwischen der Oberfläche 5 und der Oberfläche 59 ist größer als der zwischen der Oberfläche 51 der Lagereinrichtung 23 und der Oberfläche 59 des Objektträgers. Daher bleibt die Flüssigkeit im schmaleren Spalt zwischen Objektträger 57 und Grundplatte 3, sie fließt also nicht in den etwas größeren Spalt zwischen der als Dichtung wirkenden Lagereinrichtung 23 und dem Objektträger 57.

Wird auf den Rahmen 27 der Plattform 1 nun ein Druck ausgeübt, so kann der erste Bereich 29 der Lagereinrichtung 23 gegenüber dem zweiten Bereich 33 eine Relativbewegung ausführen, weil ein elastischer dritter Bereich 35 zwischen den beiden ersten und zweiten Bereichen vorgesehen ist. Ein Druck auf die Plattform 1 bewirkt, wenn die Grundplatte 3 auf einem Objektträger aufliegt, dass der erste Bereich 29 auf den Objektträger zubewegt wird, bis der erste Bereich 29 die Oberfläche 59 berührt und dort dichtend anliegt. Damit wird der Raum zwischen Grundplatte 3 und Objektträger 57 im Randbereich vollständig abgedichtet. Da vorzugsweise der erste Bereich 29 der Lagereinrichtung 23 auf einer Stirnseite 31 des Rahmens 27 angeordnet ist, kann der Rahmen 27 den ersten Bereich 29 über die gesamte Umfangsfläche um die Grundplatte 3 herum dichtend an den Objektträger 57 anpressen. Damit wirkt die Lagereinrichtung 23 einerseits als elastische Aufhängung für die Grundplatte 3, andererseits aber auch als Dichtung gegenüber der Oberfläche 59 des Objektträgers 57. Die Oberfläche des ersten Bereichs 29 kann entsprechend an diese Funktion angepasst werden, beispielsweise entlang der Außenkontur der Grundplatte 3 verlaufende Rippen und Rillen, also Lamellen aufweisen, um die Dichtwirkung zu verbessern. Die Anzahl der Lamellen kann an den Anwendungsfall angepasst werden. Es kann also auch ausreichen, lediglich eine einzige umlaufende Lamelle vorzusehen.

Durch den ersten Bereich 29 der Lagereinrichtung 23 wird der Raum zwischen Grundplatte 3 und Objektträger 57 druckdicht abgeschlossen, sodass auch eine Erwärmung einer in diesem Raum eingebrachten Flüssigkeit nicht zu deren Verdampfung führt.

Um einen Überdruck in dem Raum zu vermeiden, kann der erste Bereich 29 auch mit senkrecht zur Außenkontur der Grundplatte 3 verlaufenden Rinnen versehen werden, die so flach sind, dass sie ab einem gewissen Anpressdruck gegenüber dem Objektträger 57 geschlossen sind. Ab einem bestimmten Innendruck im Raum können die Rinnen aufgedrückt werden sodass ein sogenanntes Abblasen erfolgt und eine Beschädigung des Objektträgers und/oder der Plattform 1 sicher vermieden wird.

Die Flüssigkeit kann über den mindestens einen Ansatz 37, 65 in den Raum zwischen Grundplatte 3 und Objektträger 57 eingebracht werden. Es ist aber auch möglich, über eine Pipettierfläche 45 Flüssigkeit in den Raum einzuführen, wenn die Grundplatte 3 noch nicht fest gegen den Objektträger 57 angepresst wird. Dazu kann Flüssigkeit auf die Pipettierfläche 45 aufgeträufelt oder über eine Öffnung 49 im Bereich der Pipettierfläche 45 Flüssigkeit zugeführt werden, die dann in den Raum eindringen kann, wobei, wie gesagt, Kapillar- und Adhäsionskräfte wirken.

Die Flüssigkeit kann durch eine einzige Öffnung aus dem Raum abgesaugt werden. Um den Absaugvorgang zu erleichtern, kann die Grundplatte 3 gegenüber dem Objektträger verschwenkt werden, sodass ein sich verändernder Abstand zwischen Oberfläche 5 der Grundplatte und Oberfläche 59 des Objektträgers 57 gebildet wird und sich die Flüssigkeit in den Bereich kleinster Dicke zurückzieht. Es ist damit möglich, die Flüssigkeit in einen definierten Bereich des Raumes zu leiten und dort abzusaugen. Beispielsweise kann bei dem Ausführungsbeispiel gemäß Figur 10 die Grundplatte 3 auf dem Objektträger 57 mittels des Vorsprungs 61 im oberen Bereich etwas angehoben werden, sodass die im Raum zwischen Grundplatte 3 und Objektträger 57 eingeschlossene Flüssigkeit sich entlang der unteren Längskante 9 sammelt. Über den zweiten Ansatz 65 kann diese dann leicht abgesaugt werden.

Denkbar ist es auch, mit dem Vorsprung 61 die Grundplatte 3 im linken Bereich, also im Bereich der Schmalseite 17 etwas anzuheben, sodass sich die Flüssigkeit im Bereich des Ansatzes 67 sammelt und abgesaugt werden kann.

Vorzugsweise ist die Kippbewegung der Grundplatte 3 so vorzunehmen, dass dabei der umlaufende erste Bereich 29 der hier als Dichtung wirkenden Lagereinrichtung 23 nicht von der Oberfläche 59 des Objektträgers 57 abgehoben wird.

Die Grundfunktion der elastisch aufgehängten Grundplatte 3 der Plattform 1 kann unabhängig von der Art des Aufsetzens der Plattform 1 auf einen Objektträger 57 ausgenutzt werden: Es ist also möglich, die Grundplatte 3 parallel zum Objektträger an diesen anzunähern, bis diese auf der Oberfläche 59 anliegt und sich an dem mindestens einen Abstandshalter 7 abstützt. Es ist aber auch möglich, die Plattform 1 mittels einer Schwenkbewegung der Oberfläche 59 des Objektträgers 57 anzunähern und dabei zunächst die Grundplatte 3 so auf der Oberfläche 59 des Objektträgers aufzusetzen, dass ein randoffener Raum eingeschlossen wird.

Nach dem Aufsetzen der Grundplatte 3 auf dem Objektträger 57 wird eine Druckkraft auf die Plattform 1 ausgeübt, bis der erste Bereich 29 der Lagereinrichtung 23 den ursprünglich randoffenen Raum rundum abdichtet. Diese Dichtwirkung wird dadurch ermöglicht, dass die Lagereinrichtung 23 einen ersten Bereich 29 aufweist, der dem Rahmen 27 der Plattform 1 zugeordnet ist, und einen zweiten Bereich 33, der der Außenkontur der Grundplatte 3 zugeordnet ist. Zwischen diesen Bereichen 29 und 33 liegt ein elastischer dritter Bereich 35, der nach dem Aufsetzen der Grundplatte 3 eine weitere Bewegung des ersten Bereichs 29 zulässt, bis dieser dichtend auf der Oberfläche 59 des Objektträgers 57 anliegt und der Raum zwischen Grundplatte und Objektträger vollständig eingeschlossen ist.

Ein Vergleich der Ausführungsbeispiele nach den Figuren 1 bis 8 und 9 bis 11 zeigt, dass es allein entscheidend ist, dass der erste Bereich 29 und der zweite Bereich 33 der Lagereinrichtung 23 elastisch miteinander verbunden sind und zwar durch den elastischen dritten Bereich 35. Wie dieser im Einzelnen ausgeführt ist, ist mehr oder weniger freigestellt. Das in den Figuren 1 bis 6 dargestellte Ausführungsbeispiel zeichnet sich allerdings dadurch aus, dass dem Objektträger 57 eine glatte Oberfläche 51 der Lagereinrichtung 23 zugewandt ist, sodass sich hier, anders als bei dem Ausführungsbeispiel nach den Figuren 9 bis 11, keine Substanzen ablagern können. Bei dem Ausführungsbeispiel nach den Figuren 1 bis 11 können sich in der Nut 55 Substanzen ablagern, die möglicherweise Untersuchungsergebnisse negativ beeinflussen.

Allen Ausführungsbeispielen ist gemeinsam, dass in die Oberfläche 5 der Grundplatte 3 mindestens eine Öffnung mündet, über die Flüssigkeit in den Raum zwischen Grundplatte und Objektträger eingebracht und abgesaugt werden kann. Dabei kann die Flüssigkeit über eine einzige Öffnung eingebracht und abgesaugt werden. Denkbar ist es aber auch, zwei an gegenüberliegenden Seiten des eingeschlossenen Raums vorgesehene Öffnungen anzuordnen, über die in den Raum eingebrachte Flüssigkeiten durch eine Strömung ausgetragen werden können. Es wird dann in einer Öffnung eine Flüssigkeit eingeleitet und über die andere Öffnung Flüssigkeit abgesaugt, bis eine bestimmte Flüssigkeit durch eine andere vollständig verdrängt ist.

Die Lagereinrichtung 23 besteht vorzugsweise aus einem elastischen Material, das gegenüber den im Gebrauch der Plattform 1 verwendeten Flüssigkeiten inert und insbesondere reversibel verformbar ist. Besonders bevorzugt wird Silikon. Durch die reversible Verformbarkeit ist es möglich, die Plattform 1 viele Male einzusetzen, wobei die Grundplatte 3 in einer ersten Funktionsstellung in eine quasi vorgeschobene Position gehoben wird und in einer zweiten Funktionsstellung die Lagereinrichtung 23 mit dem ersten Bereich 29 als Dichtung dient. Dazu bedarf es einer Relativbewegung zwischen diesem ersten Bereich 29 und einem zweiten Bereich 33, der mit der Grundplatte 3 gekoppelt ist. Diese Bewegung wird rückläufig ausge- : führt, wenn die Anpresskraft auf die Plattform 1 reduziert und der erste Bereich 29 von der Oberfläche 59 des Objektträgers 57 abgehoben wird. Das heißt also, beim Abnehmen der Plattform 1 wird die Grundplatte 3 wieder in ihre herausgehobene Ausgangsposition zurückverlagert.

Für die hier beschriebene Funktion ist es von entscheidender Bedeutung, dass eine Relativbewegung zwischen der Grundplatte 3 und den diese tragenden Rahmen 27 ermöglicht ist.

Durch eine geeignete Halterung 67 kann die Plattform 1 leicht aufgenommen werden, wobei durch Schienen 69 und 71 eine Verlagerung der Plattform 1 dergestalt möglich ist, dass bestimmte Bereiche der Oberfläche 59 eines Objektträgers 57 abgedeckt werden, um einen eingeschlossenen Raum zu bilden. Es ist also nicht mehr nötig, die komplette Oberfläche 59 des Objektträgers 57 abzudecken. Vielmehr können mit relativ kleinen Grundflächen einer Grundplatte 3 spezielle Bereiche des Objektträgers 57 abgedeckt werden. Einerseits wird also Flüssigkeit dadurch eingespart, dass ein Verdunstungsschutz geschaffen wird, andererseits ergibt sich auch ein Sparpotential dadurch, dass verschiedene kleine Bereiche der Oberfläche eines Objektträgers definiert abgedeckt und abgedichtet werden.

Es zeigt sich im Übrigen auch, dass der Halter 67 sehr einfach aufgebaut und somit preiswert realisierbar ist. Auch ist eine Reinigung des Halters aufgrund der einfachen Struktur leicht möglich. Der Halter kann ohne weiteres mit einer Basis 67 kombiniert werden, wobei besonders bevorzugt wird, dass eine lösbare Verbindung zwischen einem Basisteil 85 und der Halterung 67 realisiert wird.

Das in Figur 13 und 14 dargestellte Basisteil 85 kann auch insofern abgewandelt werden, als mehrere parallel zueinander liegende Seitenwände 89 und 91 vorgesehen werden, zwischen denen jeweils eine Halterung schwenkbar angeordnet werden kann. Das Basisteil 85 kann also auch eine Vielzahl von nebeneinander liegenden Objektträgern 57 aufnehmen, auf die dann mittels der Halterung 67 jeweils eine Plattform 1 abgesenkt wird.

Grundsätzlich ist es auch möglich, innerhalb einer Halterung 67 zwei hintereinander liegende Plattformen in die Schienen 69 und 71 einzuführen und verschiedene Bereiche eines Objektträgers zu untersuchen. Mit Hilfe der hier beschriebenen Plattform 1 können auch sehr kleine Bereiche der Oberfläche 59 eines Objektträgers 57 dicht abgeschlossen werden, sodass das Volumen der verwendeten Reagenzien stark reduziert werden kann. Der durch die Lagereinrichtung 23 realisierte Verdunstungsschutz führt zusätzlich zu einer Ersparnis an Reagenzien, was angesichts des hohen Preises einiger derartiger Reagenzien einen großen Vorteil darstellt.

Die hier beschriebene Plattform 1 zeichnet sich dadurch aus, dass sie einfach aufgebaut und daher kostengünstig herstellbar ist. Die Erläuterungen zeigen, dass die Plattform einfach zur Realisierung einer Vorrichtung zum Benetzen von Objekten, insbesondere von Inkubations-/Hybridisierungskammern einsetzbar ist. Dabei ist ohne besondere Vorkehrungen die entstehende Kammer auf einfache Weise gegen Verdunstung geschützt, indem diese rundum durch eine Dichtung abgeschlossen wird, die durch die Lagereinrichtung 23 zwischen Grundplatte 3 und dem diese tragenden Rahmen 27 realisierbar ist. Auch wird deutlich, dass die Plattform 1 bei automatisierten Verfahren verwendbar ist, bei denen die Zu-/Abfuhr von Reagenzien mittels Pipettierautomaten erfolgt.

## Patentansprüche

1. Plattform für eine Vorrichtung zum Benetzen von Objekten, insbesondere für eine Inkubations-/Hybridisierungskammer, die begrenzt wird durch einen Objektträger (57) und durch die in einem Abstand zum Objektträger (57) angeordnete Plattform (1), die eine mit mindestens einem Abstandshalter (7) versehene Grundplatte (3) und einen diese tragenden Rahmen (27) aufweist, **dadurch gekennzeichnet, dass** die Grundplatte (3) gegenüber dem Rahmen (27) mittels einer Lagereinrichtung (23) beweglich gelagert ist, dass die Lagereinrichtung (23) auch als Dichtung wirkt und den zwischen Grundplatte (3) und Objektträger (57) eingeschlossenen Raum abdichtet und folgende Bereiche aufweist: einen ersten Bereich (29), der mit dem Rahmen (27) beziehungsweise mit dessen Stirnseite (31) verbunden ist, einen zweiten Bereich (33), der mit der Grundplatte (3) verbunden ist und einen elastischen dritten Bereich (35), der zwischen dem ersten Bereich (29) und dem zweiten Bereich (33) angeordnet ist, und dass die Lagereinrichtung in einer ersten Funktionsstellung die Grundplatte (3) so hält, dass sie gegenüber dem Rahmen (27) und/oder der Lagereinrichtung (23) vorspringt und in einer zweiten Funktionsstellung bereichsweise über eine gedachte Ebene (E) hinausragt, in der die Oberfläche (5) der Grundplatte angeordnet ist.

2. Plattform nach Anspruch 1, **dadurch gekennzeichnet, dass** die Lagereinrichtung (23) aus elastischem Material - vorzugsweise aus Silikon - besteht.

3. Plattform nach Anspruch 1 oder 2, **dadurch gekennzeichnet, dass** die Lagereinrichtung (23) ringförmig ausgebildet ist.

4. Plattform nach einem der vorhergehenden Ansprüche, **dadurch gekennzeichnet, dass** der dritte Bereich (35) eine dünnere Wandstärke aufweist als der erste Bereich (29) und/oder der zweite Bereich (33).

5. Plattform nach einem der vorhergehenden Ansprüche, **dadurch gekennzeichnet, dass** die Lagereinrichtung (23) einen als Pipettieransatz dienenden Vorsprung (43) aufweist.

6. Plattform nach einem der vorhergehenden Ansprüche, **dadurch gekennzeichnet, dass** die Grundplatte (3) mindestens einen Ansatz (37,65) aufweist.

7. Plattform nach einem der vorhergehenden Ansprüche, **gekennzeichnet durch** mindestens eine Zuleitung zu dem zwischen der Grundplatte (3) und dem Objektträger (57) liegenden Raum.

8. Plattform nach Anspruch 7, **dadurch gekennzeichnet, dass** die mindestens eine Zuleitung eine in der Oberfläche der Grundplatte liegende Öffnung (21) aufweist.

9. Plattform nach einem der vorhergehenden Ansprüche, **gekennzeichnet durch** mindestens eine Ableitung von dem zwischen Grundplatte (3) und Objektträger (57) liegenden Raum.

10. Plattform nach Anspruch 9, **dadurch gekennzeichnet, dass** die mindestens eine Ableitung eine in der Oberfläche (5) der Grundplatte (3) liegende Öffnung aufweist.

11. Plattform nach einem der Ansprüche 1 bis 10, **dadurch gekennzeichnet, dass** die mindestens eine Zu-und/oder die mindestens eine Ableitung-vorzugsweise durch eine Membran (39) verschließbar ist.

12. Plattform nach einem der vorhergehenden Ansprüche, **gekennzeichnet durch** eine Halterung (67).

13. Plattform nach einem der vorhergehenden Ansprüche, **dadurch gekennzeichnet, dass** die Halterung mit einem Basisteil (85) - vorzugsweise schwenkbar - verbindbar ist.

14. Verfahren zum Benetzen von Objekten, insbesondere zur Bildung einer Inkubations-/Hybridisierungskammer, mittels einer eine mit mindestens einem Abstandshalter (7) versehene Grundplatte (25) und einen diesen tragenden Rahmen (27) aufweisenden Plattform (1) und eines Objektträgers (57), mittels einer Plattform (1) nach einem der Ansprüche 1 bis 13, mit folgenden Schritten:
- Aufsetzen der Grundplatte (3) auf den Objektträger (57) mittels des mit der Grundplatte (3) über eine Lagereinrichtung (23) beweglich verbundenen Rahmens (27), so dass der mindestens eine Abstandshalter (7) die Grundplatte (3) in einem Abstand zum Objektträger (57) hält und ein seitlich offener Raum zwischen Grundplatte (3) und Objektträger (57) eingeschlossen wird,
- Ausüben einer Kraft auf den Rahmen (27) der Grundplatte (3), so dass die Lagereinrichtung (23) auf der Oberfläche (59) des Objektträgers (57) aufliegt und den Raum zwischen Grundplatte (3) und Objektträger (57) dichtend abschließt.

## Claims

1. Platform for a device for wetting objects, especially for an incubation/hybridization chamber that is defined by an object support (57) and by the platform (1) arranged at a distance to said object support (57), said platform comprising a base (3) provided with at least one spacer (7) and a frame (27) carrying said base, **characterized in that** the base (3) is movably mounted relative to the frame (27) by means of a bearing device (23), that said bearing device also functions as a sealing and tightly seals the space between base (3) and object support (57) and comprises the following areas: a first area (29) which is connected with the frame (27) or, respectively, with its front face (31), a second area (33) which is connected with the base (3), and an elastic third area (35) which is arranged between the first area (29) and the second area (33), and that the bearing device, in a first functional position, maintains the base (3) in such a manner that it projects from the frame (27) and/or the bearing device (23), and in a second functional position it projects in some areas beyond an imaginary plane (E) in which the surface (5) of the base is disposed.

2. Platform according to claim 1, **characterized in that** the bearing device (23) consists of an elastic material - preferably silicone.

3. Platform according to claim 1 or 2, **characterized in that** the bearing device (23) is annular in design.

4. Platform according to any one of the preceding claims, **characterized in that** the third area (35) has a thinner wall thickness than the first area (29) and/or the second area (33).

5. Platform according to any one of the preceding claims, **characterized in that** the bearing device (23) comprises a projection (43) serving as a pipetting attachment.

6. Platform according to any one of the preceding claims, **characterized in that** the base (3) comprises at least one attachment (37, 65).

7. Platform according to any one of the preceding claims, **characterized by** at least one supply line to the space lying between the base (3) and the object support (57).

8. Platform according to claim 7, **characterized in that** the at least one supply line comprises an opening (21) provided in the surface of the base.

9. Platform according to any one of the preceding claims, **characterized by** at least one discharge line from the space lying between the base (3) and the object support (57).

10. Platform according to claim 9, **characterized in that** the at least one discharge line comprises an opening provided in the surface (5) of the base (3).

11. Platform according to any one of the claims 1 to 10, **characterized in that** the at least one supply line and/or the at least one discharge line is closable - preferably by a membrane (39).

12. Platform according to any one of the preceding claims, **characterized by** a holder (67).

13. Platform according to any one of the preceding claims, **characterized in that** the holder is connectable with a basic part (85), preferably swivelling.

14. Method for wetting objects, especially for forming an incubation/hybridization chamber by means of a base (25) being provided with at least one spacer (7) and a platform (1) comprising a frame (27) carrying it and an object support (57), by means of a platform (1) according to any one of the claims 1 to 13, with the following steps:
- setting the base (3) onto the object support (57) by means of the frame (27) movably connected to the base (3) via a bearing device (23) so that the at least one spacer (7) keeps the base (3) at a distance to the object support (57) and a laterally open space between base (3) and object support (57) is enclosed;
- exertion of a force on the frame (27) of the base (3) so that the bearing device (23) rests on the surface (59) of the object support (57) and tightly seals the space between base (3) and object support (57).

## Revendications

1. Plate-forme pour un dispositif pour la mouillage des objets, notamment pour une chambre d'incubation / hybridation qui est limitée par un porte-objet (57) et par la plate-forme (1) disposée à une distance du porte-objet (57), la plate-forme présentant une plaque de base (3) munie d'au moins un espaceur (7), et un cadre (27) portant celle-ci, **caractérisée en ce que** plaque de base (3) est supportée de manière mobile par rapport au cadre (27) au moyen d'un moyen de support (23), **en ce que** le moyen de support (23) agit aussi comme un joint d'étanchéité et rend étanche l'espace confiné entre la plaque de base (3) et le porte-objet (57), et présente les régions suivantes : une première région (29) liée avec le cadre (27) ou sa face frontale (31), une deuxième région (33) liée avec la plaque de base (3), et un troisième région (35) élastique disposée entre la première région (29) et la deuxième région (33), et **en ce que** le moyen de support, dans une première position de fonction, maintient la plaque de base (3) de telle manière qu'elle saillit par rapport au cadre (27) et/ou le moyen de support (23), et, dans une seconde position de fonction, dépasse au moins par zones un plan imaginaire (E) dans lequel la surface (5) de la plaque de base est disposée.

2. Plate-forme selon la revendication 1, **caractérisée en ce que** le moyen de support (23) est constitué d'une matière élastique, de préférence de la silicone.

3. Plate-forme selon la revendication 1 ou 2, **caractérisée en ce que le** moyen de support (23) est configuré sous forme annulaire.

4. Plate-forme selon l'une quelconque des revendications précédentes, **caractérisée en ce que** la troisième région (35) présente une épaisseur de paroi plus faible que la première région (29) et/ou la deuxième région (33).

5. Plate-forme selon l'une quelconque des revendications précédentes, **caractérisée en ce que** le moyen de support (23) présente une partie en saillie (43) servant en tant que saillie de pipetage.

6. Plate-forme selon l'une quelconque des revendications précédentes, **caractérisée en ce que** la plaque de base (3) présente au moins une saillie (37, 65).

7. Plate-forme selon l'une quelconque des revendications précédentes, **caractérisée par** au moins une ligne d'alimentation vers l'espace entre la plaque de base (3) et le porte-objet (57).

8. Plate-forme selon la revendication 7, **caractérisée en ce que** la au moins une ligne d'alimentation présente une ouverture (21) dans la surface de la plaque de base.

9. Plate-forme selon l'une quelconque des revendications précédentes, **caractérisée par** au moins une ligne d'évacuation de l'espace entre la plaque de base (3) et le porte-objet (57).

10. Plate-forme selon la revendication 9, **caractérisée en ce que** la au moins une ligne d'évacuation présente une ouverture dans la surface (5) de la plaque de base (3).

11. Plate-forme selon l'une quelconque des revendications 1 à 10, **caractérisée en ce que** la au moins une ligne d'alimentation et/ou la au moins une ligne d'évacuation peut/peuvent être fermée(s), de préférence par une membrane (39).

12. Plate-forme selon l'une quelconque des revendications précédentes, **caractérisée par** une fixation (67).

13. Plate-forme selon l'une quelconque des revendications précédentes, **caractérisée en ce que** la fixation peut être raccordée, de préférence en manière pivotant, avec un élément de base (85).

14. Procédé pour la mouillage des objets, notamment pour la formation d'une chambre d'incubation / hybridation au moyen d'une plate-forme (1), avec une plaque de base (25) munie d'au moins un espaceur (7) et un cadre (27) portant celui-ci, et d'un porte-objet (57), au moyen d'une plate-forme (1) selon l'une quelconque des revendications 1 à 13, avec les étapes suivantes :
- mettre la plaque de base (3) sur le porte-objet (57) au moyen du cadre (27) lié de manière mobile avec la plaque de base (3) par un moyen de support (23), de telle manière que le au moins un espaceur (7) maintient la plaque de base (3) à une distance du porte-objet (57), est un espace ouvert sur les côtés est confiné entre la plaque de base (3) et le porte-objet (57),
- appliquer une force sur le cadre (27) de la plaque de base (3), de telle manière que le moyen de support (23) reste sur la surface (59) du porte-objet (57) et ferme l'espace entre la plaque de base (3) et le porte-objet (57) de façon étanche.
